# EUROPEAN PATENT SPECIFICATION

(11) **EP 2 426 387 B1**
(45) Date of publication and mention of the grant of the patent: **29.10.2014**
(21) Application number: 11186124.1
(22) Date of filing: 26.07.2006
(51) Int. Cl.: F16K 11/02

(54) **Reciprocating piston pump with air valve, detent and poppets**
Hubkolbenpumpe mit Luftventil, Arretierung und Tellerventilen
Pompe à piston alternative avec clapet d'aération, encliquetage et poupées

(30) Priority: 29.07.2005 US 704046 P; 18.05.2006 US 747604 P
(43) Date of publication of application: 07.03.2012
(62) Divisional of application: 06788580.6
(73) Proprietor: Graco Minnesota Inc., Minneapolis, MN 55413 (US)
(72) Inventor: Bauck, Mark L., Coon Rapids, MN 55448 (US); Isais, John F. Jr., Brooklyn Park, MN 55428 (US); Weinberger, Mark T., Mounds View, MN 55112 (US); Pittman, David M., Sussex, WI 53089 (US); Bloom, Michael E., Oak Grove, MN 55303 (US)
(74) Representative: Webb, Peter Reginald

(56) References cited:
- DE-U- 1 814 598
- FR-A1- 2 458 016
- US-A- 3 977 425

## Description

### BACKGROUND ART

Air-operated reciprocating piston pumps are well known for the pumping of various fluids. Such pumps typically have mechanically or pneumatically operated air valves to control the flow of air to the two sides of the piston.

United States Patent No. 3,977,425 discloses a hydraulic pressure control valve comprising a piston slideably disposed in a bore, a push-rod disposed in the bore and a supply pressure chamber, which communicates with a source of hydraulic power. An actuating pressure space within the bore communicates with a pressure actuating means. Provided in the pressure chamber is a supply valve, which is seated, under spring action, on a supply valve seat. A normally open exhaust valve connects the actuating pressure space with a reservoir supplying hydraulic fluid to the pressure source. The push rod moves toward the pressure space and the piston, when operated for closing the exhaust valve, and moves further in the same direction to open the supply valve.

In FR 2458016 a fluid mixer valve is described for mixing hot water with cold. The valve comprises a body, an inlet communicating with a source of cold water and an outlet communicating with a water heater. A second outlet is provided for the flow of cold water and a conduit for guiding the heated water, which has been forced back by the heating apparatus, toward the second outlet, thereby to mix the heated water with the cold water. A control mechanism, which is movable inside the body, can be placed in a predetermined manner between a position allowing cold water to be obtained, and a position allowing water of a predetermined maximum temperature to be obtained.

A three-way valve is the subject of German utility model no. 1814598. The valve, which is for hydraulic and pneumatic conduits, comprises a housing and two control sliders, which are carried in fluid-tight manner within the housing. The first slider is movable from the outside against the force of a spring and acts to close a first connection opening. The second slider, which acts to open a second connection opening, can be displaced by the first slider against the force of a spring supported in the housing, as soon as the first slider has closed the first connection opening. The housing includes a casing, which is provided with the connection openings, and an inner member disposed in the casing, the inner member having a tubular end, on which the second slider is journalled.

### DISCLOSURE OF THE INVENTION

It is therefore an object of this invention to provide a poppet assembly which allows enhanced control of a reciprocating air motor by minimizing changeover time and reducing the tendency of the valve to ice.

In accordance with the present invention, there is provided a poppet assembly as set forth in claim 1.

The exhaust porting in the air valve is shortened to minimize the effects of icing. This allows the exhaust to flow straight through the valve eliminating the cup lift associated with traditional u-cup designs which have to turn the exhaust air. Valve actuation forces are independent of supply pressure due to opposing valve plates.

The air valve is constructed of two opposing stationary valve plates and a moving through-cup positioned between the plates. The through-cup(s) have separate exhaust and supply ports that function as a four way valve. The through-cup is constructed of two spring loaded mating cups with a sealed exhaust port passing straight through the assembly.

In one arrangement, there are dual through-cups with one supply and one exhaust port. This configuration requires a cylinder A and B port, two exhaust ports (one for each cup) and a sealed valve housing which supplies pressurized air. The advantage of this configuration is that the separate valve mechanisms can be located at the cylinder ends to minimize port length.

In another arrangement, a single through-cup has an exhaust port only. This configuration requires a cylinder A and B port, one exhaust port and a sealed valve housing which supplies pressurized air. With this arrangement, only one through-cup is required.

In yet another arrangement, a single through-cup is provided with a central supply port and two exhaust ports. This allows a leaky logic pilot scheme without inverted pilot porting.

The motor valving includes two poppet assemblies, which form the subject of the present invention, with one being located in the top cap and the other in the bottom cap. The poppet assembly includes a t-shaped sealing material that seals on both faces. Through most of the motor stroke, the A side of the poppet assembly is sealed preventing air leakage from the valve piston. As the motor reaches the end of its stroke, the motor piston opens the poppet's A side while sealing the B side. When the poppet opens, it vents one side of the piston valve, shifting the valve. Sealing the poppet on the B side ensures the depressurized side of the valve piston does not have a replenishing air supply thereby maximizing valve speed. After motor changeover, the poppet resets to its normal position. Fast changeover and valve speed translates to reduced output pressure pulsation from the pump and increased performance and efficiency.

These and other objects and advantages of the invention will appear more fully from the following description made in conjunction with the accompanying drawings wherein like reference characters refer to the same or similar parts throughout the several views.

### BRIEF DESCRIPTION OF DRAWINGS

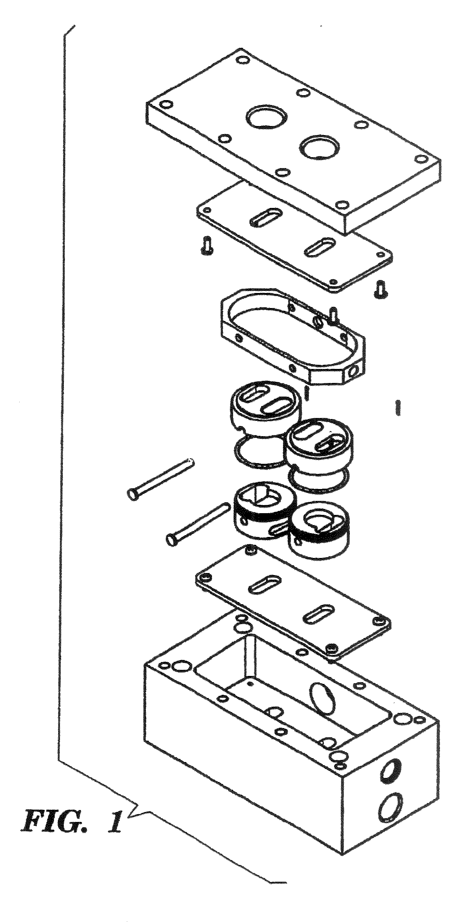

Figure 1 shows a cross-section of an air valve included as a background to the instant invention.

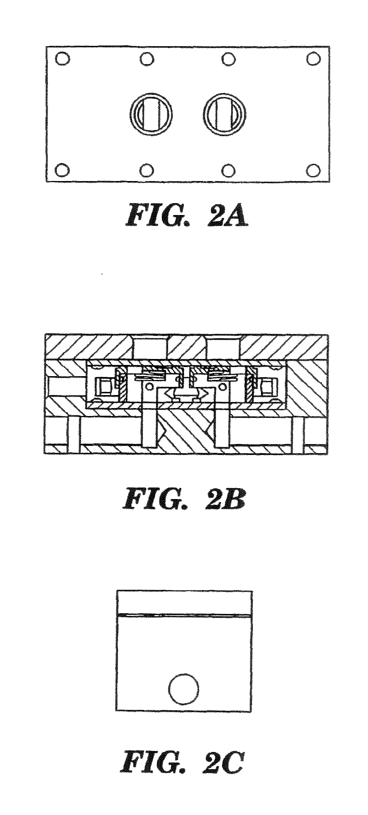

Figure 2 shows a cross-section (opposite that of Figure 1) of the air valve.

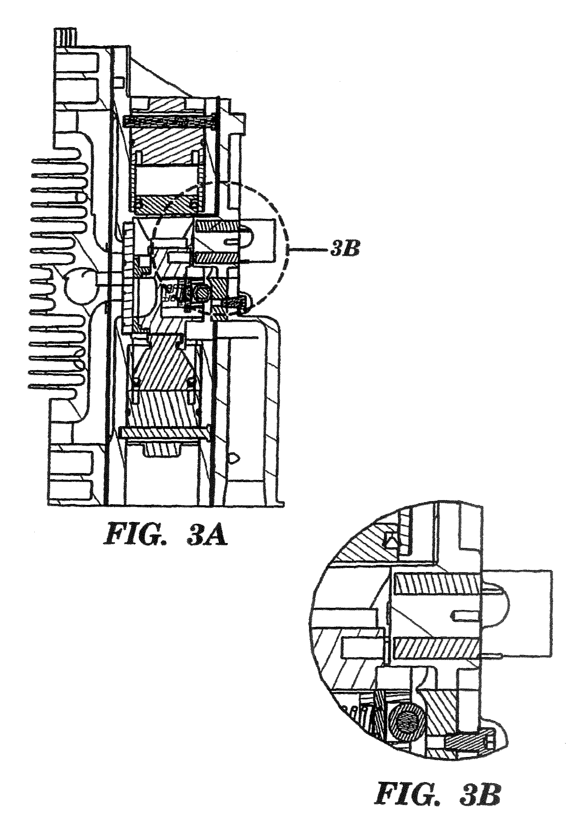

Figure 3 shows an exploded view of the air valve.

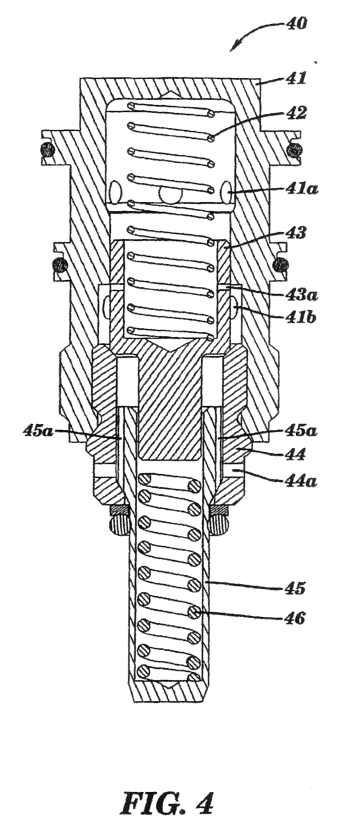

Figure 4 shows a cross-section of a poppet assembly in the closed position.

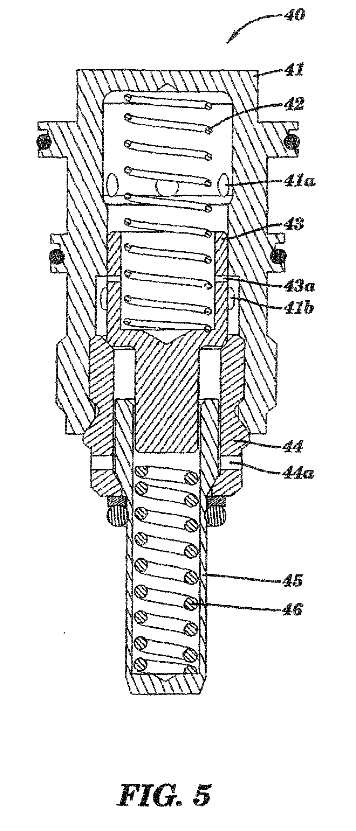

Figure 5 shows a cross-section of the poppet assembly in the open position.
Figure 6 shows a schematic of the air flow through the air valve and poppets while the piston travels upwardly.
Figure 7 shows a schematic of the air flow through the air valve and poppets while the piston is changing over at the upper limit of travel.
Figure 8 shows a schematic of the air flow through the air valve and poppets after the valve has changed over.
Figure 9 shows a schematic of the air flow through the air valve and poppets while the piston travels downwardly.

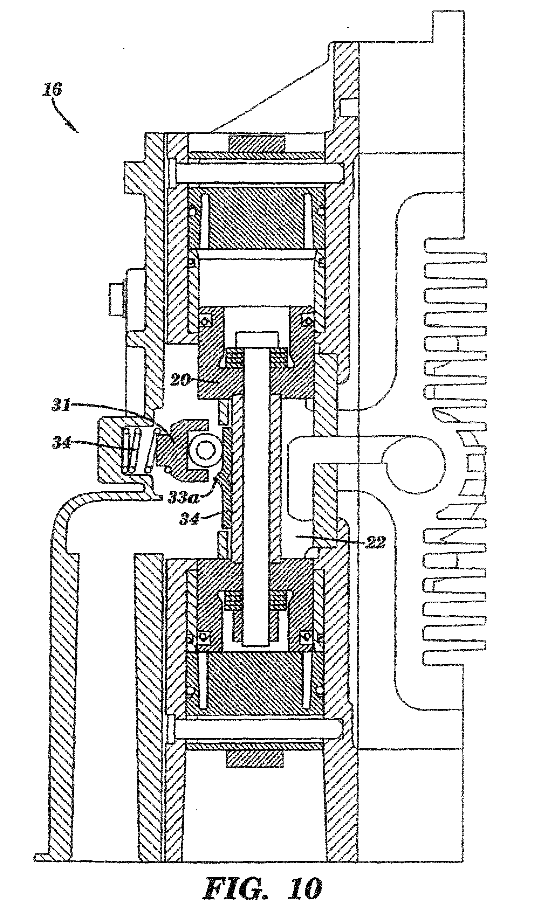

Figure 10 shows a cross-section of a detented air valve.

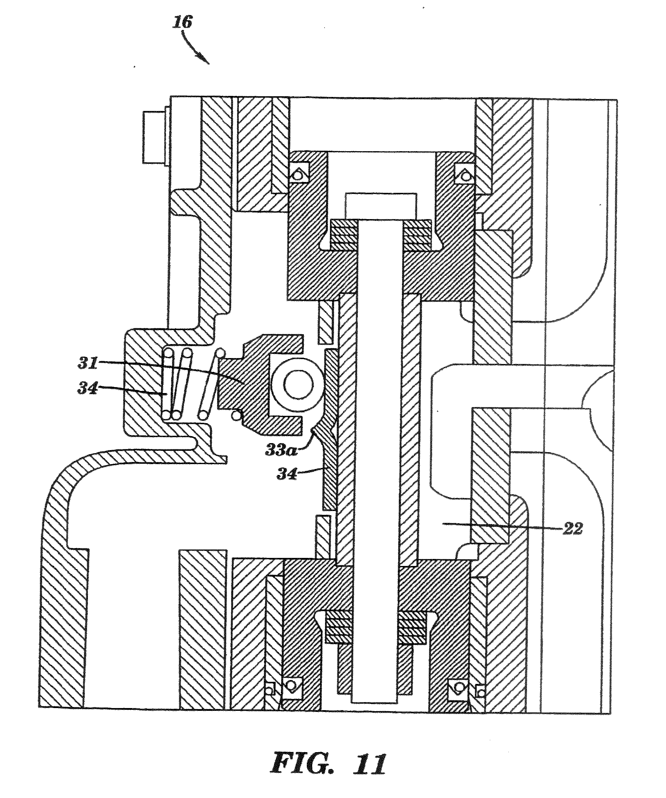

Figure 11 shows a detailed cross-section of the detented air valve.

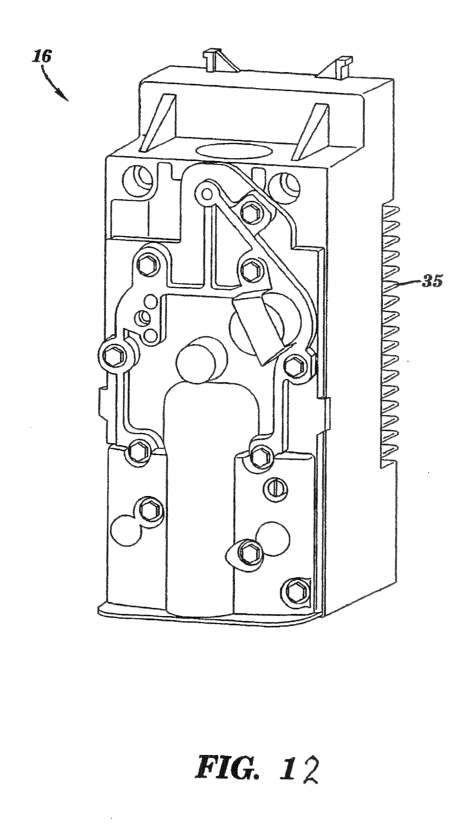

Figure 12 shows the air valve assembly and solenoid.

### BEST MODE FOR CARRYING OUT THE INVENTION

The air valve, which forms the background of the present invention, may be constructed of two opposing stationary valve plates and a moving through-cup positioned between the plates. The through-cup(s) have separate exhaust and supply ports that function as a four way valve. The through-cup is constructed of two spring loaded mating cups with a sealed exhaust port passing straight through the assembly.

In the preferred arrangement, a single through-cup has an exhaust port only. This configuration requires a cylinder A and B port, one exhaust port and a sealed valve housing which supplies pressurized air. With this arrangement, only one through-cup is required.

In one arrangement, there are dual through-cups with one supply and one exhaust port. This configuration requires a cylinder A and B port, two exhaust ports (one for each cup) and a sealed valve housing which supplies pressurized air. The advantage of this configuration is that the separate valve mechanisms can be located at the cylinder ends to minimize port length. In yet another arrangement, a single through-cup is provided with a central supply port and two exhaust ports. This allows a leaky logic pilot scheme without inverted pilot porting.

The motor valving includes two poppet assemblies 40, which are the subject of the present invention, with one being located in the top cap and the other in the bottom cap. The poppet assembly 40 serves two functions. First it will supply air to valve pistons 47 and 48 and second, it will vent the air pressure in valve areas 47 and 48.

While in the normal or closed position, poppet assembly 40 allows pressurized supply air to pass through the top holes 41a in poppet housing 41, through the holes 43a in poppet 43, through the bottom holes 41b in the housing 41 to the valve piston area 47 or 48.

Air pressure plus spring 42 force holds the poppet 43 in the closed position sealed on seat 44. The motor piston 10 pushes on poppet actuator 45 compressing spring 46 until the spring 46 pressure exceeds the combined holding pressure of the supply air and spring 42 whereupon poppet 43 unseats from seat 44. The air pressure holding force quickly drops allowing the poppet 43 to snap open. When poppet 43 opens, it vents one of the valve piston areas (47, 48) through ports 41b, the flutes 45a in actuator 45 and out ports 44a to passage 50 and closes off supply air to that piston area allowing the valve 20 to shift. The vented air is routed to atmosphere independently through passage 50 from the valve exhaust thereby ensuring complete valve 20 shifts even if the valve exhaust is restricted. This is important in preventing the pump from hanging up.

Through most of the motor stroke, the A side of the poppet assembly is sealed preventing air leakage from the valve piston. As the motor reaches the end of its stroke, the motor piston opens the poppet's A side while sealing the B side. When the poppet opens, it vents one side of the piston valve, shifting the valve. Sealing the poppet on the B side ensures the depressurized side of the valve piston does not have a replenishing air supply thereby maximizing valve speed. After motor changeover, the poppet resets to its normal position. Fast changeover and valve speed translates to reduced output pressure pulsation from the pump and increased performance and efficiency.

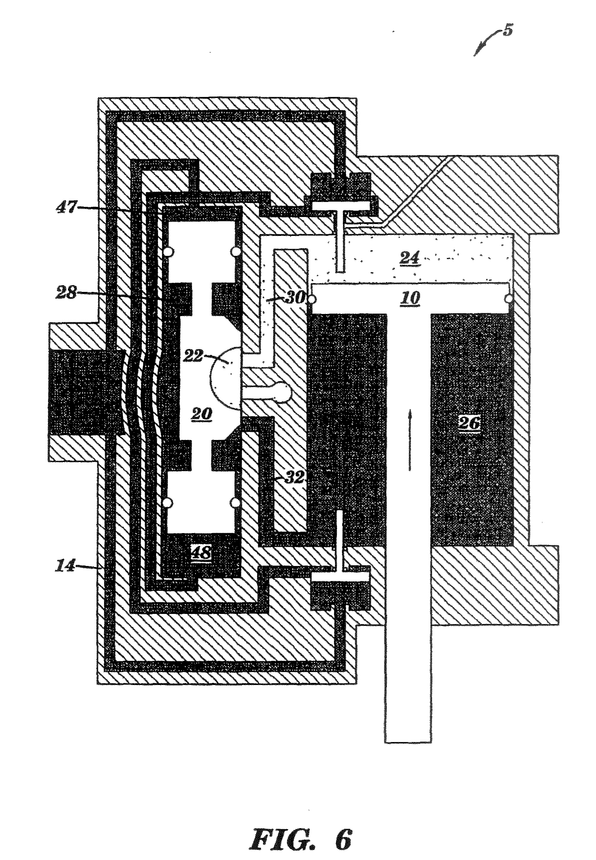

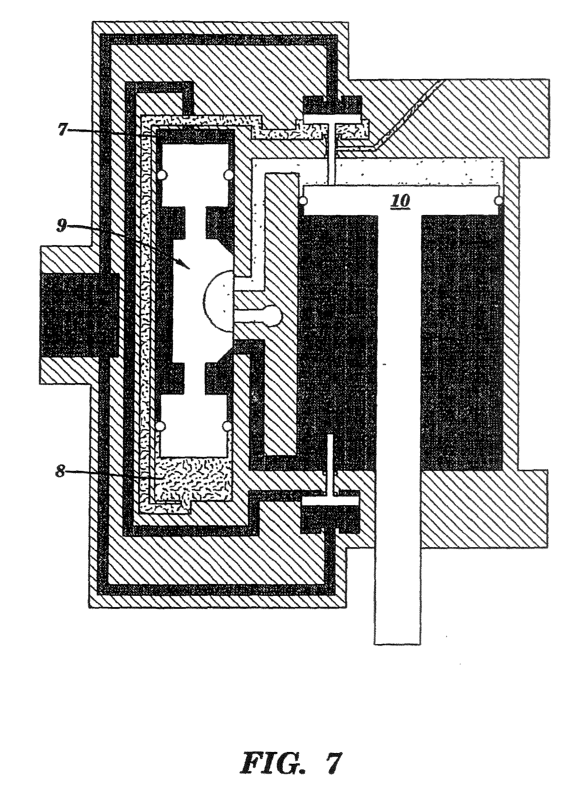

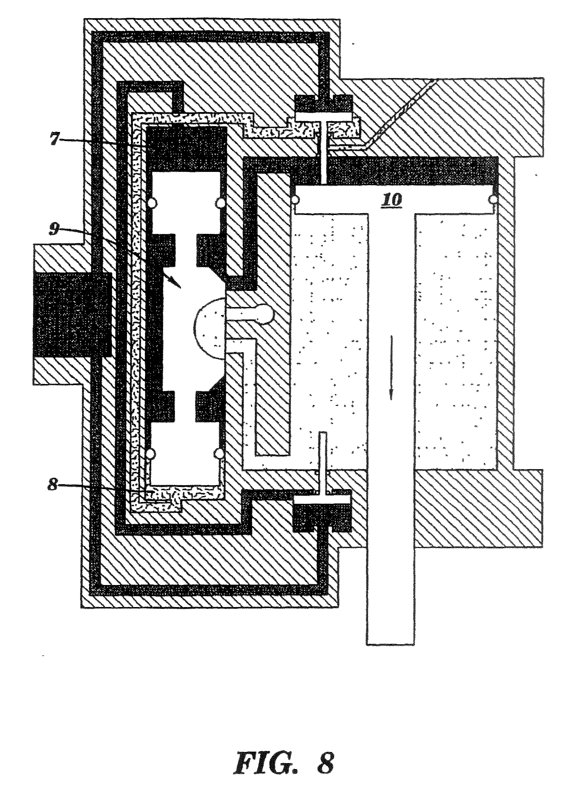

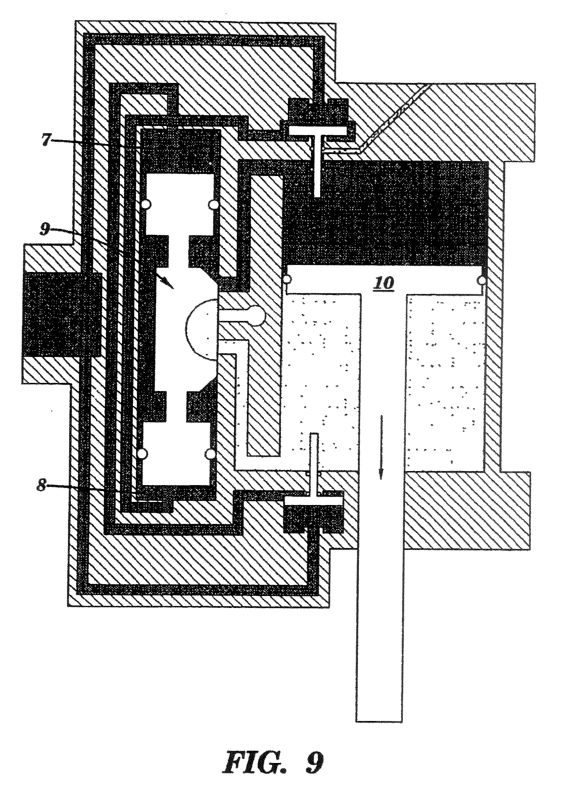

Put simply as shown in Figs. 6-9, the valve piston 19 is always located in the same as the main piston 10 is traveling towards. Thus, in Figure 6, main piston 10 is traveling upwardly and valve piston 20 is located in the upper end of the valve housing 14. Similarly, in Figure 9, main piston 10 is traveling downwardly and valve piston 20 is located in the lower end of the valve housing 14. Also helpful in visualizing operation is that top poppet assembly 40 communicates with the bottom valve piston area 48 while the bottom poppet assembly 40 to the top valve piston area 47.

The main air valve 16 has piston 20 which is provided with an exhaust cup 22 which alternatively communicates with the top 24 and bottom 26 of piston 10. The interior area 28 of the air valve housing 14 is provided with a source of pressurized air. Valve piston 16 moves and alternately uncovers ports 30 and 32 which lead to the top 24 and bottom 26 of piston 10 respectively.

A detent is provided on the main air valve 16 and is comprised of a roller assembly 31, a spring 34 and a ramp 33 mounted to the back valve of cup 22. Roller assembly 31 allows ramp 33 and valve cup assembly 22 to move approximately 3.8 mm (.150 inches) before nesting against ramp ridge 33a. The geometry of the roller assembly 31 and ramp 33 then hold the valve 16 in position until the air signal from the poppet assemblies 40 is sufficient to fully move the valve cup 22. Because of the radii of the ramp and the pointed ridge 33a, the valve assembly 16 is unstable at ridge 33a. This prevents the valve assembly from stopping in a centered position which would stall the motor. It also prevents the valve assembly 16 from centering during transit which could cause startup problems.

Another function of the detent is to ensure that the valve cup assembly 22 moves of the solenoid 35 which extends to block valve assembly 16 after a runaway condition has occurred. The solenoid 35 is battery powered and has a low retraction force. When energized, the valve assembly 16 is allowed to move 5.6 mm (.220 inches) before coming into contact with solenoid 35. The solenoid 35 then prevents valve assembly 16 from moving further thereby stopping the motor.

It is contemplated that various changes and modifications may be made to the valve and poppets without departing from the scope of the invention as defined by the following claim.

## Claims

1. A poppet assembly (40) comprising:
a poppet housing (41) having an axis and first and second sets of housing ports (41 a, 41b), said first and second sets of housing ports being axially spaced;
a poppet seat (44) in said housing, said seat having a set of seat ports (44a);
a poppet (43) located in said poppet housing and retained therein by said seat, said poppet having a set of poppet ports (43a) and being biased against said seat in a first position and moveable to a second position away from said seat; and
a poppet actuator (45) located in said seat and partially surrounding said poppet, said poppet actuator being biased away from said poppet, whereby when said poppet is in said first position, said first set of housing ports (41b) are in fluid communication with said second set of housing ports (41a) through said poppet ports (43a) and when in said second position, said first set of housing ports (41b) are in fluid communication with said seat ports (44a).

## Patentansprüche

1. Tellerventilbaugruppe (40), die Folgendes umfasst:
ein Tellerventilgehäuse (41), das eine Achse und einen ersten und einen zweiten Satz Gehäuseanschlussöffnungen (41a, 41b) aufweist, wobei der erste und der zweite Satz Gehäuseanschlussöffnungen axial voneinander beabstandet sind;
einen Tellerventilsitz (44) in dem Gehäuse, wobei der Sitz einen Satz Sitzanschlussöffnungen (44a) aufweist;
ein Tellerventil (43), das sich in dem Tellerventilgehäuse befindet und durch den Sitz darin gehalten wird, wobei das Tellerventil einen Satz Tellerventilanschlussöffnungen (43a) aufweist und gegen den Sitz in einer ersten Position vorgespannt ist und in eine zweite Position bewegt werden kann, die von dem Sitz entfernt liegt; und
ein Tellerventil-Stellglied (45), das sich in dem Sitz befindet und das Tellerventil teilweise umgibt, wobei das Tellerventil-Stellglied von dem Tellerventil fort vorgespannt ist, wobei, wenn sich das Tellerventil in der ersten Position befindet, der erste Satz Gehäuseanschlussöffnungen (41b) durch die Tellerventilanschlussöffnungen (43a) in Strömungsverbindung mit dem zweiten Satz Gehäuseanschlussöffnungen (41a) steht, und wenn es sich in der zweiten Position befindet, der erste Satz Gehäuseanschlussöffnungen (41b) in Strömungsverbindung mit den Sitzanschlussöffnungen (44a) steht.

## Revendications

1. Ensemble de poupée (40) comprenant :
un logement de poupée (41) ayant un axe et un premier et un second ensembles de ports de logement (41a, 41b), lesdits premier et second ensembles de ports de logement étant espacés axialement ;
un siège de poupée (44) dans ledit logement, ledit siège ayant un ensemble de ports de siège (44a) ;
une poupée (43) située dans ledit logement de poupée et retenue dans celui-ci par ledit siège, ladite poupée ayant un ensemble de ports de poupée (43a) et étant polarisée contre ledit siège dans une première position et déplaçable dans une seconde position s'éloignant dudit siège ; et
un actionneur de poupée (45) situé dans ledit siège et entourant partiellement ladite poupée, ledit actionneur de poupée étant polarisé en s'éloignant de ladite poupée, moyennant quoi quand ladite poupée est dans ladite première position, ledit premier ensemble de ports de logement (41b) sont en communication de fluide avec ledit second ensemble de ports de logement (41a) par l'intermédiaire desdits ports de poupée (43a) et quand il se trouve dans ladite seconde position, ledit premier ensemble de ports de logement (41b) sont en communication de fluide avec lesdits ports de siège (44a).
